# EUROPÄISCHE PATENTSCHRIFT

(11) **EP 1 109 848 B1**
(45) Veröffentlichungstag und Bekanntmachung des Hinweises auf die Patenterteilung: **12.06.2002**
(21) Anmeldenummer: 99944468.0
(22) Anmeldetag: 23.08.1999
(51) Int. Cl.: C08G 18/24, C08G 18/22, C08G 18/10

(54) **REAKTIVBINDEMITTEL MIT VERLÄNGERTER TOPFZEIT**
REACTIVE BINDING AGENT WITH AN EXTENDED POT LIFE
LIANTS REACTIFS A DELAI D'UTILISATION PROLONGEE

(30) Priorität: 04.09.1998 DE 19840318
(43) Veröffentlichungstag der Anmeldung: 27.06.2001
(73) Patentinhaber: Bayer Aktiengesellschaft, 51368 Leverkusen (DE)
(72) Erfinder: GROTH, Stefan, D-51373 Leverkusen (DE); MAZANEK, Jan, D-51061 Köln (DE); LANGEL, Rolf, D-51381 Leverkusen (DE); SCHÜTZE, Detlef-Ingo, D-51061 Köln (DE); URBAN, Jürgen, D-51061 Köln (DE)
(86) Internationale Anmeldenummer: EP9906147
(87) Internationale Veröffentlichungsnummer: WO0014138

(56) Entgegenhaltungen:
- EP-A- 0 628 581
- EP-A- 0 677 541
- DE-A- 19 632 925

## Beschreibung

Die Erfindung betrifft reaktionsfähige Massen (Reaktivbindemittel) auf Basis von Isocyanat-haltigen Verbindungen und Polyolen mit verlängerter Topfzeit bei Raumtemperatur und hoher Reaktivität bei erhöhter Temperatur sowie die Verwendung dieser Massen zur Beschichtung von Substraten jeglicher Art, vornehmlich von flexiblen Substraten wie Textilien und Leder oder zur Verwendung im Reaktionsspritzguß-(RIM)-Verfahren.

Lösungsmittelfreie bzw. -arme reaktionsfähige Massen auf Basis von NCO-Prepolymeren mit langer Topfzeit sind seit einiger Zeit bekannt wie etwa die Kombination aus blockierten NCO-Prepolymeren und cycloaliphatischen Diaminen. Hierbei wird ein Ketoxim-blockiertes NCO-Prepolymerisat auf Basis von aromatischen Polyisocyanaten mit einem Diamin als Kettenverlängerer gemischt und anschließend durch eine Hitzebehandlung unter Abspaltung des Ketoxims und gegebenenfalls Verdampfen des Lösungsmittels ausgehärtet. Reaktionsfähige Massen dieser Art für die Beschichtung flexibler Substrate werden z.B. in der DE-A 29 02 090 beschrieben.

Auch reaktionsfähige Massen auf Basis Ketoxim-blockierter Prepolymerisate aus aliphatischen Polyisocyanaten sind bekannt (EP-A 65 688). Sie erfordern jedoch deutlich höhere Härtungstemperaturen als die Systeme auf Basis aromatischer Polyisocyanate, weswegen Reaktivsysteme auf Basis aliphatischer Polyisocyanate bisher keine breite technische Verwendung gefunden haben.

Bei der Härtung der beschriebenen Systeme erfolgt also eine Abspaltung des Ketoxims, die selbst dann eine Abluftbehandlung notwendig macht, wenn die Systeme keine Lösungsmittel enthalten. Außerdem führte die Blockierung freier NCO-Gruppen zu zusätzlichen Urethangruppen und damit zu einer erhöhten Viskosität der Prepolymere, die in den meisten Fällen durch Zusatz von Lösungsmittel kompensiert werden muß.

Dagegen werden in der EP-A 825 209 abspalterfreie Reaktivbindemittel beschrieben, die sich aufgrund ihrer günstigen Reaktionskinetik und der sehr guten mechanischen Film-Eigenschaften hervorragend zur Beschichtung von Textilien und anderen flächigen Substraten eignen.

Es handelt sich hierbei um Isocyanatprepolymere, die mit bestimmten Diolen als Kettenverlängerern vernetzt werden. Diese Beschichtungsmittel weisen Topfzeiten von 6 bis 16 Stunden auf, wenn Katalysatorsysteme aus organischen Zinnverbindungen und Thiolgruppen-haltigen Verbindungen wie sie in der US-A 4 788 083 beschrieben sind verwendet werden.

Aus EP-A-0 628 581 sind PU-Schäume bekannt, die unter Vervendung von Amin- und Sn(IV)-Katalysatoren hergestellt sind ggf. mit nicht-flüchtigen Inhibitoren (z.B bestimmte Thiophenole). Zur Desaktivierung von Sn (IV)-Katalysatoren können Säure-generierende Verbindungen (z.B. Säure chloride) zugesetzt werden.

Aufgabe war es nun bei gleichbleibenden Härtungsbedingungen die Topfzeiten auf über 24 Stunden auszudehnen, um eine Verarbeitung der Reaktivbindemittel an zwei aufeinanderfolgenden Tagen zu gewährleisten.

Es wurde nun überraschend gefunden, daß die Topfzeit von Reaktivbindemitteln aus Isocyanat-haltigen Verbindungen und Polyolen, katalysiert durch eine Kombination von Zinnverbindungen mit Thiolgruppen-haltigen Verbindungen, durch den Zusatz geringer Mengen von hydrolysierbaren Halogenverbindungen erheblich verlängert werden kann.

Gegenstand der Erfindung sind also reaktionsfähige Massen, bestehend aus Isocyanat-haltigen Verbindungen A und Polyolen B, dadurch gekennzeichnet, daß sie zusätzlich eine Katalysator-Kombination enthalten aus
C) einer organischen Zinn- oder Wismutverbindung,
D) einer Thiolgruppen tragenden Verbindung oder ein mit einer Isocyanatgruppe in Gegenwart eines tertiären Amins als Aktivator reaktionsfähiges Polyphenol mit benachbarten Hydroxylgruppen oder Gemische,
E) einer hydrolysierbaren Halogenverbindung,
wobei das Molverhältnis SH und/oder OH:Metall 2 bis 500 ist und Halogen/Metall 0,05 bis 10 ist.

Das Molverhältnis SH/Metall liegt bevorzugt zwischen 2 und 5, wohingegen das Molverhältnis Halogen/Metall bevorzugt einen Wert zwischen 0,2 und 4 einnimmt.

Die Massen können sowohl durch Hitzeeinwirkung als auch durch Aktivatoren (Amine), wie in der US-A 4788083 beschrieben, gehärtet werden. Bevorzugt ist jedoch die thermische Härtung bei Temperaturen von 60 bis 190°C.

Als organische Zinnverbindungen C) wird eine Vielzahl herkömmlicher Zinnkatalysatoren verwendet werden. Zu den üblichen Zinnkatalysatoren gehören beispielsweise Zinn(II)-octoat, Dibutylzinndicarboxylate, wie Dibutylzinndioctoat, Zinnmercaptide wie Dibutylzinndilaurylmercaptid oder Dialkylzinnbis(2-ethylhexyl)mercaptoacetat), Zinn(II)-acetat, Zinn(IV)-oxid, Zinn(II)-citrat, Zinn(II)-oxalat, Tetraphenylzinn, Tetrabutylzinn, Tri-n-butylzinnacetat, Di-n-butylzinndilaurat sowie Gemische davon.

Als organische Wismutverbindung C) wird eine Vielzahl üblicher Wismut-Katalysatoren eingesetzt werden. Zu den üblichen Wismut-Katalysatoren gehören beispielsweise Wismuttricarboxylate, z. B. Acetate und Oleate, Wismutnitrat, Wismutsulfid, basische Wismutdicarboxylate, z. B. Wismutyl-neodecanoat, Wismutsubsalicylat und Wismutsubgallat, sowie Gemische davon.

Als Thiolgruppen tragende Verbindungen (SH-Verbindungen, Mercaptane) D) werden erfindungsgemäß eine Vielzahl monofunktioneller und polyfunktioneller Mercaptane mit Erfolg verwendet werden. Beispiele für geeignete Mercaptane sind:
Trimethylolpropan-tri-(3-mercaptopropionat), Pentaerythrit-tetra-(3-mercaptopropionat), Glykol-di-(3(3-mercaptopropionat), Glykol-dimercaptoacetat, Trimethylolpropantrithioglykolat, Mercaptodiäthyläther, Äthandithiol, Thiomilchsäure, Mercaptopropionsäure und Ester davon, Thiophenol, Thioessigsäure, 2-Mercaptoäthanol, 1,4-Butandithiol, 2,3-Dimercaptopropanol, Toluol-3,4-dithiol, α,α'-Dimercapto-p-xylol, Thiosalicylsäure, Mercaptoessigsäure und Ester, Mercaptoessigsäure-(2-ethylhexyl)-ester, Dodecandithiol, Didodecandithiol, Dithiophenol, Di-p-chlorthiophenol, Dimercaptobenzothiazol, 3,4-Dimercaptotoluol, Allylmercaptan, Benzylmercaptan, 1,6-Hexandithiol, 1-Octanthiol, p-Thiokresol, 2,3,5,6-Tetrafluorthiophenol, Cyclohexylmercaptan, Methylthioglykolat, verschiedene Mercaptopyridine, Dithioerythrit, 6-Äthoxy-2-mercaptobenzothiazol und d-Limonendimercaptan sowie Gemische davon.

Zusätzlich zu den monofunktionellen oder polyfunktionellen Mercaptan-Monomeren oder -Oligomeren D) kann eine Vielzahl von polymeren Verbindungen derart synthetisiert oder modifiziert werden, daß sie Thiolgruppen aufweisen. Spezielle Beispiele für Mercaptane, die zur Herstellung der polymeren Verbindungen mit funktionellen Mercaptangruppen zur Verwendung in den Rezepturen der erfindungsgemäßen Reaktionsgemische verwendet werden können, sind 1,4-Butandithiol, 2,3-Dimercaptopropanol, Toluol-3,4-dithiol und α,α'-Dimercapto-p-xylol. Beispiele für weitere geeignete Mercaptan-Verbindungen sind Thiosalicylsäure, Mercaptoessigsäure, 2-Mercaptoäthanol, Dodecandithiol, Didodecandithiol, Dithiolphenol, Di-p-chlorthiophenol, Dimercaptobenzothiazol, 3,4-Dimercaptotoluol, Allylmercaptan, 1,6-Hexandithiol, Mercaptopropionsäure, p-Thiokresol, d-Limonen-dimercaptan, Cyclohexylmercaptan, Methylthioglykolat, Mercaptopyridine, Dithioerythrit und 6-Äthoxy-2-mercaptobenzothiazol.

Im wesentlichen können alle oligomeren oder polymeren Verbindungen derart modifiziert werden, daß sie Thiolgruppen enthalten. Spezielle Beispiele für Mercaptangruppen enthaltende polymere Verbindungen können sich von Epoxyharzen und epoxymodifizierten Diglycidyläthem von Bisphenol A-Verbindungen, mercaptofunktionellen Urethanen, verschiedenen aliphatischen Polyäthylen- oder Polypropylenglykol (Diglycidyläther)-Addukten und Glycidyläthem von Phenolharzen ableiten. Weitere geeignete Polymerisate mit Mercaptangruppen sind Polyamidharze, z. B. Kondensationsprodukte dimerisierter Fettsäuren, die mit einem difunktionellen Amin umgesetzt sind, wie Äthylendiamin, mit nachfolgender Umsetzung mit 3-Mercaptopropionsäure. Auch eine Vielzahl von Acrylharzen und Vinylharzen kommt für die Modifizierung gemäß vorliegender Erfindung in Betracht.

Eine weitere Verbindungsgruppe, die sich als im Sinne der Erfindung erwies, ist eine bestimmte Klasse von Polyphenolen mit benachbarten Hydroxylgruppen, die dadurch gekennzeichnet sind, daß sie in Gegenwart eines tertiären Amin-Aktivators mit einer Isocyanatgruppe reagieren. In Abwesenheit des tertiären Aminkatalysators reagieren diese Polyphenole dagegen über längere Zeiträume nicht mit Isocyanatgruppen. Die Polyphenole, die in Gegenwart eines tertiären Amin-Aktivators mit funktionellen Isocyanatgruppen reagieren, verhalten sich in Gegenwart von tertiären Amin-Aktivatoren wie Mercaptogruppen. Auch Wärme fördert die Freisetzung einer aktiven Zinn-Katalysatorspezies. Spezielle Beispiele für Polyphenole, die zur Herstellung der erfindungsgemäß verwendeten inaktiven Zinn- oder Wismut-Katalysatorkomplexe geeignet sind, sind Brenzkatechin, Pyrogallol und 3-Methoxy-brenzkatechin. Diese Polyphenole sind im einzelnen in der US-A 43 66 193 beschrieben.

Als hydrolysierbare Halogenverbindungen E) kommen grundsätzlich alle Verbindungen in Frage, die unter Zutritt von OH-Verbindungen wie beispielweise Wasser oder Alkoholen Halogenwasserstoff abspalten können. Beispiele hierfür sind Säurechloride wie Benzoylchlorid, Acetylchlorid, (iso)-Phthaloylchlorid, Hexahydrophthaloylchlorid, Carbamoylchloride, Sulfonylchloride wie Tosylchlorid oder Metallhalogenide und Organometallhalogenide wie Aluminium-, Zinn, Wismut, Titan- oder Zirkoniumchlorid. Bevorzugt werden organische Säurechloride und C₁-C₁₀-Dialkylzinnhalogenide (Cl, Br) wie beispielweise Dioctylzinndichlorid, entsprechende Diarylzinnhalogenide wie Diphenylzinndichlorid und Aralkylzinndihalogenide wie Dibenzylzinndichlorid eingesetzt.

Als Isocyanat-haltige Verbindungen sind aliphatische Polyisocyanate (siehe Lackharze, Chemie, Eigenschaften und Anwendungen, Hrsg. D. Stoye, W. Freitag, Hanser Verlag, München, Wien 1996) und aliphatische Isocyanat-Prepolymere bevorzugt.

Das Polyol B) kann ein monomerer Poly-Alkohol oder ein polymeres Polyol sein, z. B. ein Polyacrylat, Polyester, Polyäther oder Polyurethanpolyol. Beispiele finden sich in *Lackharze, Chemie, Eigenschaften und Anwendungen*, Hanser Verlag, München, Wien **1996.**

Auch eine olefinische Unsättigung kann in dem monomeren Alkohol oder polymeren Polyol enthalten sein oder anschließend in üblicher Weise in ein polymeres Polyol oder einen monomeren Alkohol eingebaut werden, wenn eine derartige Unsättigung gewünscht wird. Übliche Umsetzungen hierfür sind die Umsetzung eines monomeren Alkohols oder polymeren Polyols beispielsweise mit Acrylsäuren, Acrylhalogeniden, Äthern mit endständigen Acrylresten, Acryl- oder Methacrylanhydriden, Acrylaten mit endständigen Isocyanatgruppen oder Epoxyacrylaten.

Weitere Reaktionen zur Herstellung von Hydroxylgruppenn aufweisenden Polymerisaten sind die Umsetzung eines Hydroxyethylacrylat-Monomeren, Hydroxyethylmethacrylat-Monomeren oder eines Allylätheralkohols mit einem cyclischen Anhydrid, wie z. B. Maleinsäure-, Phthalsäure-, Bernsteinsäure-, Norbomen- oder Glutarsäureanhydrid. Ungesättigte Polyesterpolyole können dann gegebenenfalls mit einem geeigneten Oxiran umgesetzt werden, beispielsweise mit Äthylenoxid, Propylenoxid, Glycidylacrylat, Allylglycidyläther, α-Olefin-Epoxide oder Butylglycidyläther. Beispiele für geeignete Allylalkohole sind Trimethylolpropanmonoallyläther, Trimethylolpropandiallyläther und Allylhydroxypropyläther.

Der Vorteil der Erfindung besteht darin, daß bereits geringe Mengen an hydrolysierbaren Halogenverbindungen genügen, um eine stark verlängerte Topfzeit zu erreichen. ohne eine verlängerte Härtungszeit zu verursachen.

Die Erfindung ist daher besonders gut für abspalterfreie Reaktivbindemittel aus NCOund OH-Komponenten geeignet, die zur Textilbeschichtung eingesetzt werden, da hier von den Anwendern eine möglichst lange Topfzeit gefordert wird.

Diese Reaktivbindemittel haben vorzugsweise einen Gehalt an inertem organischem Lösungsmittel von weniger als 20, besonders bevorzugt weniger als 15 Gew.-%, und enthalten
A) als Isocyanat haltige Verbindung vorzugsweise ein NCO-Prepolymer mit einem NCO-Gehalt von 1 bis 8 Gew.-%, vorzugsweise 2 bis 4 Gew.-% auf Basis von aliphatischen Polyisocyanat und mit einem Gehalt an monomerem Polyisocyanat unter 2, vorzugsweise unter 0,5 Gew.-%, und
B) eine Polyol-Komponente, die vorzugsweise aus mindestens 50, besonders bevorzugt zu mindestens 80 Äquivalent-%, bezogen auf die gegenüber Isocyanat reaktiven Gruppen, aus Verbindungen der Formel

   HO-X-Y-X-OH (I)

   worin
   - Y: Methylen, Ethylen, -C≡C-, Cyclohexylen-1,4, -1,3, -1,2, Phenylen-1,4, -1,3, -1,2 und
   - X: Methylen, OCH₂CH₂ (wobei der Sauerstoff an das Y gebunden ist), Cyclohexylen-1,4, -1,3, -1,2
   besteht und
   wobei das Äquivalentverhältnis der freien NCO-Gruppen aus A zu den NCO-reaktiven Gruppen von B 0,90 bis 1,50, vorzugsweise 1 bis 1,30 beträgt.

Die besonders bevorzugte Verbindung I ist 1,4-Bis-(2-hydroxyethoxy)benzol.

Im nachfolgenden werden unter "mittleren Molekulargewichten" jeweils als Zahlenmittel bestimmten Molekulargewichte verstanden.

Bevorzugte NCO-Prepolymere A) besitzen als Zahlenmittel bestimmte Molekulargewichte von 500 bis 10 000, vorzugsweise von 700 bis 8 000.

Die NCO-Prepolymeren A) können durch Umsetzung von organischen Polyisocyanaten a) mit NCO-reaktiven Verbindungen b) hergestellt werden.

Als organische Polyisocyanate a) kommen aliphatische und cycloaliphatische Polyisocyanate in Betracht.

Bevorzugte Polyisocyanate a) sind Verbindungen der Formel Q(NCO)ₙ mit einem mittleren Molekulargewicht unter 800, worin n eine Zahl von 2 bis 4 und Q einen aliphatischen C₄-C₁₂-Kohlenwasserstoffrest oder einen cycloaliphatischen C₆-C₁₅-Kohlenwasserstoffrest bedeuten, beispielsweise Diisocyanate aus der Reihe 4,4'-Diisocyanatodicyclohexylmethan, 3-Isocyanatomethyl-3,3,5-trimethylcyclohexylisocyanat (Isophorondiisocyanat = IPDI), Tetramethylendiisocyanat, Hexamethylendiisocyanat (HDI), 2-Methyl-pentamethylendiisocyanat, 2,2,4-Trimethylhexamethylendiisocyanat (THDI), Dodecamethylendiisocyanat, 1,4-Diisocyanato-cyclohexan, 4,4'-Diisocyanato-3,3'-dimethyl-dicyclohexylmethan, 4,4'-Diisocyanatodicyclohexylpropan-(2,2), 3-Isocyanatomethyl-1-methyl-1-isocyanatocyclohexan (MCI), 1,3-Diisooctylcyanato-4-methyl-cyclohexan, 1,3-Diisocyanato-2-methyl-cyclohexan und α,α,α',α'-Tetramethylm- oder -p-xylylen-diisocyanat (TMXDI) sowie aus diesen Verbindungen bestehende Gemische.

Bevorzugt ist die Verwendung von 4,4'-Diisocyanatodicyclohexylmethan, insbesondere von technischem 4,4'-Diisocyanatodicyclohexylmethan mit 10 bis 50, vorzugsweise 15 bis 25 Gew.-% trans/trans-4,4'-Diisocyanatodicyclohexylmethan.

Für spezielle Anwendungen können in Mengen bis zu 10 Äquivalente-%, bezogen auf die NCO-Gruppen der gesamten Polyisocyanate a), andere Polyisocyanate, wie sie z.B. in "Methoden der organischen Chemie" (Houben-Weyl), Bd. 14/2, Georg Thieme-Veriag, Stuttgart 1963, Seiten 61 bis 70 und in Liebigs Annalen der Chemie 562, Seiten 75 bis 136 beschrieben sind, mitverwendet werden. Besonders bevorzugt ist jedoch die alleinige Verwendung von aliphatischen und/oder cycloaliphatischen Diisocyanat, insbesondere von 4,4'-Diisocyanato-dicyclohexylmethan als einzigem Polyisocyanat.

Bevorzugte NCO-reaktive Verbindungen b) sind vor allem Polyole. Als Polyole können höhermolekulare und in untergeordneter Menge auch niedermolekulare Hydroxylverbindungen eingesetzt werden.

Höhermolekulare Hydroxylverbindungen umfassen die in der Polyurethan-Chemie üblichen Hydroxypolyester, Hydroxypolyether, Hydroxypolythioether, Hydroxypolyacetale, Hydroxypolycarbonate, Dimerfettalkohole und/oder Esteramide, jeweils mit mittleren Molekulargewichten von 400 bis 8 000, bevorzugt solche mit mittleren Molekulargewichten von 500 bis 6 500.

Als niedermolekulare Polyhydroxylverbindungen können in der Polyurethan-Chemie übliche Polyole, mit Molekulargewichten von 62 bis 399, wie Ethylenglykol, Triethylenglykol, Tetraethylenglykol, Propandiol-1,2 und -1,3, Butandiol-1,4- und -1,3, Hexandiol-1,6, Octandiol-1,8, Neopentylglykol, 1,4-Bis(hydroxymethyl)cyclohexan, Bis(hydroxymethyl)tricyclo[5.2.1.0^{2.6}]decan oder 1,4-Bis(2-hydroxyethoxy)benzol, 2-Methyl-1,3-propandiol,2,2,4-Trimethylpentandiol,2-Ethyl-1,3-hexandiol, Dipropylenglykol, Polypropylenglykole, Dibutylenglykol, Polybutylenglykole, Bisphenol A, Tetrabrombisphenol A, Glycerin, Trimethylolpropan, Hexantriol-1,2,6-Butantriol-1,2,4, Pentaerythrit, Chinit, Mannit, Sorbit, Methylglykosid und 4,3,6-Dianhydrohexite verwendet werden.

Als Polyetherpolyole geeignet sind die in Polyurethan-Chemie üblichen Polyether, wie z.B. die unter Verwendung von zwei- bis sechswertigen Startermolekülen wie Wasser oder den oben genannten Polyolen oder 1- bis 4-NH-Bindungen aufweisenden Aminen hergestellten Additions- bzw. Mischadditionsverbindungen des Tetrahydrofurans, Styroloxids, Ethylenoxids, Propylenoxids, der Butylenoxide oder des Epichlorhydrins, insbesondere des Ethylenoxids und/oder des Propylenoxids.

Als Polyesterpolyole geeignet sind z.B. Umsetzungsprodukte von mehrwertigen, vorzugsweise zweiwertigen und gegebenenfalls zusätzlich dreiwertigen Alkoholen mit mehrbasischen, vorzugsweise zweibasischen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer aromatischer und/oder heterocyclischer Natur sein und gegebenenfalls z.B. durch Halogenatome substituiert und/oder ungesättigt sein. Beispiele hierfür sind:
Adipinsäure, Phthalsäure, Isophthalsäure, Bemsteinsäure, Korksäure, Azelainsäure, Sebacinsäure, Trimellitsäure, Phthalsäureanhydrid, Tetrahydrophthalsäureanhydrid, Glutarsäureanhydrid, Tetrachlorphthalsäureanhydrid, Endomethylentetrahydrophthalsäureanhydrid, Maleinsäureanhydrid, Maleinsäure, Fumarsäure, dimere und trimere Fettsäuren wie Ölsäure, gegebenenfalls in Mischung mit monomeren Fettsäuren, Terephthalsäuredimethylester, Terephthalsäure-bis-glykolester.

Als mehrwertige Alkohole kommen die obengenannten Polyole in Frage.

Die in Frage kommenden Polycarbonatpolyole sind durch Reaktion von Kohlensäurederivaten, z.B. Diphenylcarbonat oder Phosgen, mit Diolen erhältlich. Als derartige Diole kommen z.B. Ethylenglykol, Triethylenglykol, Tetraethylenglykol, Propandiol-1,2 und -1,3,-Butandiol-1,4- und -1,3, Pentandiol-1,5, Hexandiol-1,6, Octandiol-1,8, Neopentylgkylol, 1,4-Bis(hydroxymethyl)cyclohexan, Bis(hydroxymethyl)tricyclo[5.2.1.0^{2.6}]decan oder 1,4-Bis(2-hydroxyethoxy)benzol, 2-Methyl-1,3-propandiol, 2,2,4-Trimethylpentandiol, Dipropylenglykol, Polypropylenglykole, Dibutylenglykol, Polybutylenglykole, Bisphenol A und Tetrabrombisphenol A oder Mischungen der genannten Diole in Frage. Vorzugweise erhält die Diolkomponente 40 bis 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit mindestens 1 Mol, bevorzugt 1 bis 2 Mol Caprolacton gemäß DE-AS 1 770 245, oder durch Veretherung von Hexandiol mit sich selbst zum di- oder Trihexylenglykol erhalten wurden. Die Herstellung solcher Derivate ist z.B. aus DE-A 1 570 540 bekannt. Auch die in der DE-A 3 717 060 beschriebenen Polyether-Polycarbonatdiole können eingesetzt werden.

Die Hydroxypolycarbonate sollen im wesentlichen linear sein. Sie können aber auch gegebenenfalls durch den Einbau polyfunktioneller Komponenten, insbesondere niedermolekularer Polyole, leicht verzweigt werden. Hierzu eignen sich beispielsweise Trimethylolpropan, Hexantriol-1,2,6, Glycerin, Butantriol-1,2,4, Pentaerythrit, Chinit, Mannit, Sorbit, Methylglykosid und 4,3,6-Dianhydrohexite.

Ganz besonders bevorzugt sind im Durchschnitt 2 bis 3 Hydroxylgruppen aufweisende Propylenoxidpolyether, die bis zu maximal 50 Gew.-% eingebaute Polyethylenoxid-Einheiten enthalten mit mittleren Molekulargewichten zwischen 200 und 9 000, und/oder difunktionelle Tetrahydrofuran-Polyether mit mittleren Molekulargewichten zwischen 200 und 4 000 und/oder Polypropylenoxydpolyether mit einem Gesamt-Unsättigungsgrad von maximal 0,04 mÄq/g und einem mittleren, aus OH-Gehalt und Funktionalität berechneten Molekulargewicht von 2 000 bis 12 000 eingesetzt.

Die erfindungsgemäß besonders bevorzugt einsetzbaren Polyetherpolyole mit niedrigem Unsättigungsgrad sind prinzipiell bekannt und werden beispielhaft beschrieben in der EP-A 283 148, den US-A 3 278 457,3 427 256,3 829 505,4 472 560, 3 278 458, 3 427 334, 3 941 849, 4 721 818, 3 278 459, 3 427 335 und 4 355 188. Schlüssel zur Herstellung derartiger Polyetherpolyole mit niedrigem Unsättigungsgrad ist die Katalyse mit Metallcyaniden.

Die Herstellung der Komponente A kann auf an sich bekannte Weise erfolgen, indem man die genannten Polyhydroxylverbindungen mit überschüssigem Diisocyanat, vorzugsweise bei ca. 70 bis 120°C umsetzt. Man wählt ein NCO/OH-Verhältnis von 1,5:1 bis 20:1, vorzugsweise 1,7:1 bis 15:1 und trennt gegebenenfalls überschüssiges Monomer vom Prepolymer durch bekannte technische Verfahren wie z.B. Dünnschichtdestillation oder Extraktion ab, so daß ein Polyisocyanat-Restmonomerengehalt von weniger 2 Gew.-%, vorzugsweise weniger als 0,5 Gew.-% resultiert. Besonders bevorzugt ist ein NCO/OH-Verhältnis von 4:1 bis 15:1 und die anschließende Abtrennung des Monomeren durch Dünnschichtdestillation bis auf einen Restmonomerengehalt unter 0,5 Gew.-%. Bei den so hergestellten NCO-Prepolymeren wurde im Rahmen der vorliegenden Erfindung die Beobachtung gemacht, daß sie ein besonders optimales Verhältnis von langer Verarbeitungszeit einerseits und schneller Aushärtung andererseits zeigen.

Die Komponente A) kann zwecks Einstellung der optimalen Verarbeitungsviskosität von 20 000 bis 40000 mPas bei 20°C mit bis zu 20 Gew.-%, vorzugsweise bis 15 Gew.-%, bezogen auf das NCO-Prepolymerisat, an organischen Lösungsmitteln gemischt werden. Besonders bevorzugt ist die lösungsmittelfreie Variante.

Bevorzugte Kettenverlängerer B, insbesondere bevorzugte Verbindungen I sind Verbindungen, die sich auch in Prepolymer A unter 50°C nicht lösen. Besonders bevorzugte Verbindungen I umfassen beispielsweise 1,2-Bis(2-hydroxyethoxy)benzol, 1-3-Bis(2-hydroxyethoxy)benzol, trans-1,4-Bis(hydroxymethyl)cyclohexan, 1,2-Bis(4-hydroxycyclohexyl)ethan, Bis(4-hydroxycyclohexyl)methan, 2-Butin-1,4-diol.

Die besonders bevorzugte Verbindung I ist 1,4-Bis-(2-hydroxyethoxy)-benzol.

Die Komponente B) kann als solche direkt mit dem Prepolymer gemischt werden. Es hat sich aber zwecks besserer Dosierbarkeit als günstig erwiesen, die normalerweise festen Verbindungen. I in einer flüssigen Komponente anzurühren. Solche Mischungen bestehen dann vorzugsweise aus 20 bis 90, besonders bevorzugt 30 bis 70 Gew.-% Verbindungen I und 10 bis 80, besonders bevorzugt 30 bis 70 Gew.-% flüssige Komponente sowie 0 bis 10 Gew-%, vorzugsweise 0,1 bis 5 Gew.-% weiterer Zusatzstoffe wie Dispergiermittel, Antiabsetzmittel, Katalysatoren usw. Die flüssige Komponente kann eines der oben beschriebenen höhermolekularen Polyole und/oder ein nicht mit Isocyanaten reagierender Weichmacher und/oder ein beliebiges Lösungsmittel sein. Beispiele für geeignete Solventien sind die üblichen Lacklösemittel: Ester wie Butylacetat, Etherester wie Methoxypropylacetat, Ketone wie Aceton und 2-Butanon, Aromaten wie Xylol, Toluol oder technische Aromaten- oder Aliphatengemische oder auch dipolare Solventien wie beispielsweise N-Methylpyrrolidon, N,N-Dimethylacetamid, N,N-Dimethylformamid und Dimethylsulfoxid oder Mischungen verschiedener Lösungsmittel.

Als flüssige Komponente sind Lösungsmittel bevorzugt. Besonders bevorzugt sind toxikologisch weniger kritische aliphatische Ester oder Etherester wie beispielsweise Methoxypropylacetat oder Butylacetat.

Um eine gute Oberflächenstruktur des Films zu gewährleisten, hat es sich als zweckmäßig erwiesen, daß die feste Verbindung I in feiner Verteilung vorliegt. Die bevorzugte Größenverteilung der Teilchen liegt bei d90 = 1 bis 80 um und d99 = 5 bis 120 µm, bevorzugt d90 = 3 bis 40 um und d99 = 5 bis 60 µm. Die Verbindung I wird dann üblicherweise mit einem Dissolver in die flüssige Komponente eingearbeitet. Es ist aber auch möglich, eine übersättigter Lösung der Verbindung I durch Rekristallisieren in die gewünschte Dispersion zu überführen oder die Verbindung I aus der Schmelze zu dispergieren. Eine Herstellung in den in der Lackindustrie üblichen Perlmühlen ist ebenfalls möglich.

Die rheologischen Eigenschaften und das Absetzverhalten kann durch spezielle Additive wie hydrierte Ricinusöle, Polyhamstoffderivate oder spezielle Kieselsäuren günstig beeinflußt werden (siehe J. Beilman, "Lackadditive, Wiley-VCH-Verlag GmbH, 1998). Als Dispergiermittel sind insbesondere polymere Additive geeignet. Sie bestehen vorzugsweise aus chemisch unterschiedlichen Segmenten, die je nach Struktur entweder mit der Oberfläche der zu dispergierenden Teilchen in Wechselwirkung treten oder aber als solvatisierte Ketten zu deren sterischer Stabilisierung beitragen. Als Beispiele der funktionellen Gruppen, die mit den Pigment- oder Füllstoffteilchen oder aber mit der kristallinen Verbindung I in der erfindungsgemäßen Vernetzerkomponente B in Wechselwirkung treten können, sind Carbonyl-, Amino-, Sulfat- oder Phosphatgruppen zu nennen. Beispiele für Polymersegmente, die zur Stabilisierung der Teilchen beitragen, sind Polyether, Polyester oder Polyacrylate.

Die erfindungsgemäße Einsatzmenge des Katalysatorsystems, das als Bestandteil der Komponente B oder als Katalysatorlösung in einem beliebigen Lösungsmittel eingesetzt werden kann beträgt 0,001 bis 2, bevorzugt 0,005 bis 0,5 Gew.-%, bezogen auf das Gesamtgewicht der Komponente A + Komponente B.

Die Vermischung des NCO-Prepolymerisats A mit der Kettenverlängererkomponente B erfolgt im allgemeinen etwa im Verhältnis der Äquivalentgewichte dieser Komponenten, obwohl für einige Anwendungszwecke auch eine Untervernetzung zweckmäßig ist, so daß das Äquivalentverhältnis von NCO zu OH erfindungsgemäß im allgemeinen 0,90 bis 1,50, bevorzugt 1,0 bis 1,3 beträgt.

Zur Herstellung der gebrauchtsfertigen Reaktivmassen können Zuschläge wie z.B. Pigmente, UV-Stabilisatoren, Verlaufmittel, Antioxidantien, Füllstoffe oder Treibmittel beigemischt werden.

Es können Lackhilfsmittel eingesetzt werden, wie sie beispielsweise in J. Beilman. "Lackadditive, Wiley-VCH-Verlag GmbH, 1998 beschrieben sind. Insbesondere sind Verlauf und Dispergiermittel sowie rheologische Additive für die Herstellung der erfindungsgemäßen Massen geeignet. So können beispielsweise Additive auf Siliconbasis zur Verbesserung der Oberflächeneigenschaften eingesetzt werden. Zur Verbesserung des Verlaufs eignen sich besonders Additive auf Basis von Polyacrylaten. Die rheologischen Eigenschaften der Massen und das Absetzverhalten füllstoff- und pigmenthaltiger Massen kann durch spezielle Additive wie hydrierte Ricinusöle, Polyharnstoffderivate oder spezielle Kieselsäuren günstig beeinflußt werden.

Lackadditive, die den erfindungsgemäßen Massen beigesetzt werden können, können in Mengen von 0,01 bis 5%, vorzugsweise 0,05 bis 3%, eingesetzt werden.

Weiterhin können den erfindungsgemäßen Massen flammhemmende Zusätze beigemischt werden. Darunter sind feste oder flüssige Stoffe zu verstehen, deren Zusatz eine Verbesserung des Brandverhaltens des ausgehärteten Polymerfilms bewirkt. Diese Mittel sind z.B. in Journal of Coated Fabrics 1996, Vol. 25, 224 ff beschrieben. Besonders geeignet für die Anwendung in den erfindungsgemäßen Massen sind halogenund antimonfreie Flammschutzmittel wie Phosphor- oder Borsäurederivate, Calciumcarbonat, Aluminiumhydroxid, Magnesiumhydroxid oder Melamin und Melaminderivate. Besonders bevorzugt ist Melamin und seine Derivate wie beispielsweise Melaminborat oder Melaminisocyanurat. Die Flammschutzmittel können den erfindungsgemäßen Massen zu 2 bis 70 Gew.-%, bevorzugt 5 bis 35 Gew.-%, bezogen auf die Summe der Komponente A + B, zugegeben werden.

Die erfindungsgemäßen reaktionsfähigen Massen weisen gegenüber dem Stand der Technik eine verlängerte Topfzeit auf. Unter "Topfzeit" versteht man die Zeitdauer vom Zumischen des Kettenverlängerers B bis zur Verdoppelung der Viskosität, gemessen in mPas bei 23°C.

Die erfindungsgemäßen reaktionsfähigen Massen können auf jede erdenkliche Art verarbeitet werden, z.B. durch Gießen, Pressen, vorzugsweise aber durch Streichen auf ein Substrat in dünnen Schichten nach dem Direktbeschichtungsverfahren - auf Textil und Leder vorzugsweise nach dem Umkehrbeschichtungsverfahren.

Die Aushärtungszeit der erfindungsgemäßen Massen beträgt 2 bis 18, vorzugsweise 6 bis 12 Minuten. Unter Aushärtungszeit wird die Zeit verstanden, die eine 100 µm dicke Schicht der Reaktivmasse einer stufenweisen Hitzebehandlung von 80, 120 und 150°C von jeweils einem Drittel der Gesamtzeit ausgesetzt werden muß, um einen zusammenhängenden Polymerfilm mit einem nahezu konstantem 100 %-Modul (nach DIN 53 504) zu ergeben; "nahezu konstant" in diesem Zusammenhang bedeutet, daß sich der 100 %-Modul eines Polymerfilms, der unmittelbar anschließend an die Aushärtungszeit bei 150°C für ein weiteres Drittel der gesamten Aushärtungszeit bei 150°C weitererhitzt wird, von dem des wie zuvor beschrieben erzeugten Polymerfilms um nicht mehr als 5 % unterscheidet.

Die kurze Aushärtungszeit ermöglicht es, mit hoher Geschwindigkeit zu beschichten. Natürlich ist es möglich, durch einen jeweiligen spezifischen chemischen Aufbau des NCO-Prepolymerisates Schichten mit unterschiedlichen Eigenschaften, wie z.B. eine Haft-, Schaum-, Zwischen- oder Deckschicht, zu erzeugen.

Die Herstellung z.B. einer Umkehrbeschichtung kann beispielsweise folgendermaßen erfolgen: Man trägt zuerst auf einen geeigneten Zwischenträger, z.B. ein Trennpapier, die Reaktivmasse für den Deckstrich in einer Menge von ca. 30 bis 100 g/m² auf, härtet im Trockenkanal aus, bringt auf den trockenen Deckstrich die Reaktivmasse für den Haftstrich ebenfalls in einer Menge von ca. 30 bis 100 g/m², kaschiert das Substrat hinzu, härtet die Beschichtung in einem weiteren Trockenkanal bei ca. 120 bis 190°C, vorzugsweise 140 bis 170°C, aus und zieht das beschichtete Substrat vom Trennträger ab. Selbstverständlich ist es auch möglich, nur den Deck-, Zwischen- oder Haftstrich nach diesem Beschichtungsverfahren zu erzeugen und für den anderen Strich andere Beschichtungssysteme des Standes der Technik einzusetzen.

Wie schon erwähnt, können die Reaktivmassen aber auch im Direktstreichverfahren unmittelbar auf das textile Substrat aufgebracht werden. Hierbei ist der abspalterfreie und lösungsmittelfreie bzw. -arme Charakter der erfindungsgemäßen Reaktivmassen von großem Vorteil bei der Herstellung von dicken Planenbeschichtungen. Mit Auftragsmengen von 100 bis 200 g/m² können auf diese Weise ca. 0,4 mm dicke, technische Beschichtungen in nur einem Arbeitsgang erstellt werden.

Sollen mit den erfindungsgemäßen Reaktivmassen Schaumschichten hergestellt werden, dann setzt man ihnen Treibmittel sowie zweckmäßigerweise auch Schaumstabilisatoren zu. Geeignete Zusätze werden z.B. in der DE-A 1 794 006 (GB-A 1 211 339) sowie in der US-A 3 262 805 beschrieben.

### Beispiele

### Vorpolymerisat A1

3204 g eines Hydroxylpolyethers auf Basis von Trimethylolpropan, Propylenoxid und Ethylenoxid mit einem Molekulargewicht von 6 000 (Desmophen® 3973 Y, Handelsprodukt der Bayer AG) und 202 g eines Hydroxypolyethers auf Basis von Bisphenol A und Propylenoxid mit einem Molekulargewicht von 560 sowie 47 g eines Hydroxylpolyethers auf Basis von Trimethylolpropan und Propylenoxid mit einem mittleren Molekulargewicht von 454 (Desmophen® 550 U, Handelsprodukt der Bayer AG) werden mit 3458,4 g ®DESMODUR W (4,4'-Diisocyanatodicyclohexylmethan, Handelsprodukt der BAYER AG) bei 100 bis 110°C umgesetzt, bis der berechnete NCO-Gehalt von 14,2 Gew.-% erreicht ist. Es werden 0,4 g Dibutylphosphat zugesetzt, und das überschüssige 4,4'-Diisocyanatodicyclohexylmethan wird mittels Dünnschichtverdampfung bei 150 bis 180°C und einem Druck von 0,1 mbar entfernt. Das Vorpolymerisat hat eine Viskosität von 18 000 mPas bei 23°C, einen bestimmten NCO-Gehalt von 2,4 Gew.-% und somit ein Äquivalentgewicht von 1750. Der Gehalt an monomerem 4,4'-Diisocyanatodicyclohexylmethan liegt bei 0,30 %.

### Vorpolymerisat A2

750 g eines Hydroxylpolyethers auf Basis von Trimethylolpropan, Propylenoxid und Ethylenoxid mit einem Molekulargewicht von 6 000 (Desmophen® 3973 Y, Handelsprodukt der Bayer AG) sowie 875 g Polytetrahydrofuran mit einem Molekulargewicht von 1000 (PolyTHF® 1000, Handelsprodukt der BASF AG) werden mit 2784 g ®DESMODUR W bei 100 bis 110°C umgesetzt, bis der berechnete NCO-Gehalt von 17,6 Gew.-% erreicht ist. Es werden 0,89 g Dibutylphosphat zugesetzt und das überschüssige 4,4'-Diisocyanatodicyclohexylmethan wird mittels Dünnschichtverdampfung bei 150 bis 180°C und einem Druck von 0,1 mbar entfernt. Das Vorpolymerisat hat eine Viskosität von 18 000 mPas bei 23°C, einen bestimmten NCO-Gehalt von 3,9 Gew.-% und somit ein Äquivalentgewicht von 1077. Der Gehalt an monomerem 4,4'-Diisocyanatodicyclohexylmethan liegt bei 0,20 %.

### Vorpolymerisat A3

550 g eines Hydroxylpolyethers auf Basis von Propylenglykol und Propylenoxid mit einem Molekulargewicht von 1000 (Desmophen® 1600 U, Handelsprodukt der Bayer AG), 260 g Polytetrahydrofuran mit einem Molekulargewicht von 650 (PolyTHF® 650, Handelsprodukt der BASF AG) sowie 22,7 g eines Hydroxylpolyethers auf Basis Trimethylopropan und Propylenoxid mit einem mittleren Molekulargewicht von 454 (Desmophen® 550 U, Handelsprodukt der Bayer AG) werden mit 2685 g ®DESMODUR W bei 100 bis 110°C umgesetzt, bis der berechnete NCO-Gehalt von 22,0 Gew.-% erreicht ist. Es werden 0,7 g Dibutylphosphat zugesetzt und das überschüssige 4,4'-Diisocyanatodicyclohexylmethan wird mittels Dünnschichtverdampfung bei 150 bis 180°C und einem Druck von 0,1 mbar entfernt. Das Vorpolymerisat hat eine Viskosität von 34 000mPas bei 23°C, einen bestimmten NCO-Gehalt von 6,0 Gew.-% und somit ein Äquivalentgewicht von 700. Der Gehalt an monomerem 4,4'-Diisocyanatodicyclohexylmethan liegt bei 0,36 %.

### Komponente B1

210 g 1,4-Bis-(2-hydroxyethoxybenzol, 3,85 g Dioctylzinndichlorid und 5,89 g Thioglykolsäure-(2-ethylhexyl)-ester werden in 390 g N,N-Dimethylacetamid aufgelöst. Man erhält eine klare gelbliche Lösung mit einen OH-Gehalt von 5,9 Gew.-% und somit ein Äquivalentgewicht von 288.

### Komponente B2

300 g der Lösung B1 werden in einem Dissolver vorgelegt und 257,1 g 1,4-Bis-(2-hydroxyethoxy)benzol mit einer Teilchengrößenverteilung d90 = 22 µm und d99 = 45 µm werden in die Lösung bei maximal 30°C eingetragen. Die erhaltene Lösung-Dispersion hat einen OH-Gehalt von 11,2 % und somit ein Äquivalentgewicht von 152.

### Komponente B3

18,5 g 1,4-Bis-(2-hydroxyethoxy)benzol, 0,52 g Dibutylzinndilaurat und 0,52 g Thioglykolsäure-(2-ethylhexyl)-ester werden in 34,36 g N-Methylpyrrolidon gelöst. Anschließend werden 46,1 g 1,4-Bis-(2-hydroxyethoxy) benzol mit einer Teilchengrößenverteilung d90 von 15 um und d99 von 31 µm in die Lösung bei maximal 30°C eingetragen. Die erhaltene Lösung-Dispersion hat einen OH-Gehalt von 11,2 % und somit ein Äquivalentgewicht von 153.

### Komponente B4

40 g 1,4-Bis-(2-hydroxyethoxy)benzol mit einer Teilchengrößenverteilung d90 von 15 um und d99 von 31 µm werden in einem Dissolver bei maximal 30°C in eine Lösung von 0,27 g Dioctylzinndichlorid und 0,4 g Thioglykolsäure-2-ethylhexylester in 60 g Methoxypropylacetat eingetragen. Die erhaltene Dispersion hat einen OH-Gehalt von 6,9 % und somit ein Äquivalentgewicht von 248.

### Beispiele 1 bis 6

Beispiel 6 stellt ein nicht erfindungsgemäßes Vergleichsbeispiel dar.

100 g des Prepolymerisats A1 werden mit 8,7 g der Komponente B3, die gemäß Tab. 1 mit einem Zusatz an Benzoylchlorid versetzt wurde, und 1 g des Verlaufsmittels Levacast® Fluid SN (Handelsprodukt der Bayer AG) sowie 0,5 g Irganox° 1010 (Handelsprodukt der Ciba Specialties) vermischt.

**Tabelle 1**

| **Beispiel** | **1** | **2** | **3** | **4** | **5** | **6** |
|---|---|---|---|---|---|---|
| **Zusatz Benzoylchlorid zu B3 [%]** | 0,231 | 0,1848 | 0,1386 | 0,0924 | 0,0462 | 0 |
| **Mol-Verhältnis Cl/Sn** | 2,00 | 1,60 | 1,20 | 0,80 | 0,40 | 0 |

| **Viskosität [mPas]** | | | | | | |
|---|---|---|---|---|---|---|
| **0 h** | 17000 | 18000 | 16000 | 16000 | 16000 | 16000 |
| **4 h** | 17000 | 18000 | 16000 | 16000 | 16000 | 21000 |
| **6 h** | 17000 | 18000 | 16000 | 16000 | 16000 | 23000 |
| **8 h** | 17000 | 18000 | 16000 | 16000 | 24000 | geliert |
| **10 h** | 17000 | 18000 | 16000 | 16000 | geliert | |
| **24 h** | 17000 | 18000 | 28000 | geliert | | |
| **28 h** | 17000 | 18000 | geliert | | | |
| **32 h** | 17000 | 25000 | | | | |
| **48 h** | 30000 | geliert | | | | |
| **Durchhärtung des Filmes nach jeweils 3 Min 80, 120, 150°C** | OK | OK | OK | OK | OK | OK |

### Beispiel 7

100 g des Prepolymerisats A1 werden mit 16,4 g der Komponente B1, 1 g des Verlaufsmittels Levacast® Fluid SN (Handelsprodukt der Bayer AG) sowie 0,5 g Irganox® 1010 (Handelsprodukt der Ciba Specialties) vermischt. Die Mischung hat eine Anfangsviskosität von etwa 5000 mPas, gemessen bei 23°C, und nach 24 Stunden eine Viskosität von 6690 mPas. Nach dem Auftrag auf ein Trennpapier in einer Schichtdicke von ca. 100 µm wird die Mischung durch stufenweise Hitzebehandlung (3 Min. 80°C, 3 Min. 120°C und 3 Min. 150°C) ausgehärtet. Man erhält einen elastischen, homogenen Film mit hervorragenden mechanischen Eigenschaften:

| | |
|---|---|
| Modul (100 %) | 3,3 MPa |
| Zugfestigkeit | 6,3 MPa |
| Bruchdehnung | 390 % |
| Essigesterquellung | 375 % |
| Schmelzbereich | 208-210 °C |

### Beispiel 8

100 g des Prepolymerisats A1 werden mit 8,7 g der Komponente B2, 1 g des Verlaufsmittels Levacast® Fluid SN (Handelsprodukt der Bayer AG) sowie 0,5 g Irganox® 1010 (Handelsprodukt der Ciba Specialties) vermischt. Die Mischung hat eine Anfangsviskosität von etwa 8400 mPas, gemessen bei 23°C, und nach 24 Stunden eine Viskosität von 13600 mPas. Nach dem Auftrag auf ein Trennpapier in einer Schichtdicke von ca. 100 µm wird die Mischung durch stufenweise Hitzebehandlung (3 Min. 80°C, 3 Min. 120°C und 3 Min. 150°C) ausgehärtet. Man erhält einen elastischen, homogenen Film mit hervorragenden mechanischen Eigenschaften:

| | |
|---|---|
| Modul (100 %) | 3,6 MPa |
| Zugfestigkeit | 7,5 MPa |
| Bruchdehnung | 330 % |
| Essigesterquellung | 342 % |
| Schmelzbereich | 208 °C |

### Beispiel 9

100 g des Prepolymerisats A2 werden mit 18,7 g der Komponente B1, 1 g des Verlaufsmittels Levacast® Fluid SN (Handelsprodukt der Bayer AG) sowie 0,5 g Irganox® 1010 (Handelsprodukt der Ciba Specialties) vermischt. Die Mischung hat eine Anfangsviskosität von etwa 4410 mPas, gemessen bei 23°C, und nach 30 Stunden eine Viskosität von 4560 mPas. Nach dem Auftrag auf ein Trennpapier in einer Schichtdicke von ca. 100 µm wird die Mischung durch stufenweise Hitzebehandlung (3 Min. 80°C, 3 Min. 120°C und 3 Min. 150°C) ausgehärtet. Man erhält einen elastischen, homogenen Film mit hervorragenden mechanischen Eigenschaften:

| | |
|---|---|
| Modul (100 %) | 4,3 MPa |
| Zugfestigkeit | 18,8 MPa |
| Bruchdehnung | 820 % |
| Essigesterquellung | 163 % |
| Schmelzbereich | 170-175 °C |

### Beispiel 10

100 g des Prepolymerisats A3 werden mit 28,8 g der Komponente B1, 1 g des Verlaufsmittels Levacast® Fluid SN (Handelsprodukt der Bayer AG) sowie 0,5 g Irganox® 1010 (Handelsprodukt der Ciba Specialities) vermischt. Die Mischung hat eine Anfangsviskosität von etwa 2700 mPas, gemessen bei 23°C, und nach 24 Stunden eine Viskosität von 3270 mPas. Nach dem Auftrag auf ein Trennpapier in einer Schichtdicke von ca. 100 µm wird die Mischung durch stufenweise Hitzebehandlung (3 Min. 80°C, 3 Min. 120°C und 3 Min. 150°C) ausgehärtet. Man erhält einen elastischen, homogenen Film mit hervorragenden mechanischen Eigenschaften:

| | |
|---|---|
| Modul (100%) | 12,1 MPa |
| Zugfestigkeit | 31,8 MPa |
| Bruchdehnung | 420 % |
| Essigesterquellung | 110 % |
| Schmelzbereich | 178 °C |

### Beispiel 11

100 g des Prepolymerisats A1 werden mit 14,2 g der Komponente B4, 1 g des Verlaufsmittels Levacast® Fluid SN (Handelsprodukt der Bayer AG) sowie 0,5 g Irganox® 1010 (Handelsprodukt der Ciba Specialties) vermischt. Die Mischung hat eine Anfangsviskosität von etwa 5500 mPas, gemessen bei 23°C, und nach 24 Stunden eine Viskosität von 8000 mPas. Nach dem Auftrag auf ein Trennpapier in einer Schichtdicke von ca. 100 um wird die Mischung durch stufenweise Hitzebehandlung (3 Min. 120°C und 3 Min 150°C) ausgehärtet. Man erhält einen elastischen, homogenen Film mit hervorragenden mechanischen Eigenschaften.

| | |
|---|---|
| Modul (100 %) | 3,1 MPa |
| Zugefestigkeit | 6,5 Mpa |
| Bruchdehnung | 400 % |
| Essigesterquellung | 375 % |
| Schmelzbereich | 206°C. |

### Anwendungsbeispiel:

Dieses Beispiel beschreibt die Herstellung einer Textilbeschichtung aus einem Baumwollsubstrat, einem Haft- und einem Deckstrich nach dem Umkehrverfahren. Die Haftstrichpaste besteht aus der in Beispiel 7 beschriebenen Mischung, und für die Deckstrichpaste wird die unter Beispiel 9 aufgeführte Rezeptur zusammen mit 10 Gew.-% einer handelsüblichen Pigmentanreibung (z. B. Isoversal® DI-Farben, Handelsprodukt der ISL-Chemie, Kürten) und 2,5 Gew.-% eines Silikat-Füllstoffes verwendet.

Auf einer Beschichtungsmaschine mit 2 Streichwerken wird mittels eines Walzenrakels die obige Deckstrichpaste in einer Auftragsmenge von 80 g/m² auf ein Trennpapier aufgetragen und in einem Trockenkanal bei 150°C während 3 Minuten ausgehärtet. An dem zweiten Streichwerk wird in analoger Weise die obige Haftstrichpaste in einer Auftragsmenge von 60 g/m² auf den gehärteten Deckstrich gerakelt. Anschließend wird die Textilbahn, eine gerauhte Baumwollware, hinzukaschiert. Im 2. Trockenkanal wird daraufhin der Haftstrich bei 150°C während 3 bis 4 Minuten ausgehärtet.

Die Beschichtung hat einer Oberflächenhärte von Shore A 70 und weist eine gute Knickbeständigkeit und eine gute Lichtechtheit auf.

## Patentansprüche

1. Reaktionsfähige Massen aus Isocyanat-haltigen Verbindungen A) und Polyolen B), **dadurch gekennzeichnet, daß** sie eine Katalysator-Kombination enthalten aus
C) einer organischen Zinn- oder Wismutverbindung,
D) einer Thiolgruppen tragenden Verbindung oder ein mit einer Isocyanatgruppe in Gegenwart eines tertiären Amins als Aktivator reaktionsfähiges Polyphenol mit benachbarten Hydroxylgruppen oder Gemische und
E) einer hydrolysierbaren Halogenverbindung,
wobei das Molverhältnis SH und/oder OH:Metall 2 bis 500 ist und Halogen/Metall 0,05 bis 10 ist.

2. Reaktionsfähige Massen gemäß Anspruch 1 mit einem Gehalt an inertem organischem Lösungsmittel von weniger als 20 Gew-%, und bestehend aus
A) einem NCO-Prepolymer mit einem NCO-Gehalt von 1 bis 8 Gew.-%, auf Basis von aliphatischen Polyisocyanat und mit einem Gehalt an monomerem Polyisocyanat unter 2 Gew.-% und
B) einer Polyol-Komponente, die aus mindestens 50 Äquivalent-%, bezogen auf die gegenüber Isocyanat reaktiven Gruppen, aus Verbindungen der Formel
HO-X-Y-X-OH (I),
besteht, worin
Y Methylen, Ethylen, -C≡C-, Cyclohexylen-1,4, -1,3, -1,2, Phenylen-1,4, -1,3, -1,2 und
X Methylen, OCH₂CH₂ (wobei der Sauerstoff an das Y gebunden ist), Cyclohexylen-1,4, -1,3, -1,2
sind,
wobei das Äquivalentverhältnis der freien NCO-Gruppen aus A zu den NCO-reaktiven Gruppen von B 0,90 bis 1,50 beträgt.

3. Reaktionsfähige Massen gemäß Anspruch 2 bei denen die Polyolkomponente aus mindestens 50 Äquivalent-%, bezogen auf die gegenüber Isocyanat reaktiven Gruppen, aus 1,4-Bis(2-hydroxyethoxy)benzol besteht.

4. Reaktionsfähige Massen nach Anspruch 2 mit einem Gehalt an monomerem Polyisocyanat unter 0,5 Gew.-%, bezogen auf A.

5. Reaktionsfähige Massen nach Anspruch 2 mit einem Gehalt an inertem organischem Lösungsmittel bis zu 15 Gew.-%, bezogen auf A.

6. Reaktionsfähige Massen nach Anspruch 2 mit einem NCO-Präpolymer eines als Zahlenmittel bestimmten Molekulargewichts von 700 bis 8 000.

7. Reaktionsfähige Massen nach Anspruch 2, wonach das NCO-Präpolymer A ein solches auf Basis von überwiegend 4,4'-Diisocyanato-dicyclohexylmethan ist.

8. Reaktionsfähige Massen nach Anspruch 2, worin im Isocyanat-Prepolymer A im Durchschnitt 2 bis 3 Hydroxylgruppen aufweisende Propylenoxidpolyether, die bis zu maximal 50 Gew.-% eingebaute Polyethylenoxid-Einheiten enthalten, mit mittleren Molekulargewichten zwischen 200 und 9000, und/oder difunktionelle Tetrahydrofuran-Polyether mit mittleren Molekulargewichten zwischen 200 und 4000 eingesetzt werden.

9. Reaktionsfähige Massen nach Anspruch 2, wobei das Äquivalentverhältnis der freien NCO-Gruppen aus A zu den NCO-reaktiven Gruppen aus B 1 bis 1,30 beträgt.

10. Verwendung der reaktionsfähigen Massen nach Anspruch 1 als Bindemittel.

11. Verwendung der Massen nach Anspruch 1-9 zur Beschichtung beliebiger Substrate.

12. Verwendung der Massen nach Anspruch 1-9 zur Beschichtung von Leder oder Textilien.

## Claims

1. Reactive compositions consisting of isocyanate-containing compounds A) and polyols B), **characterised in that** they contain a catalyst combination consisting of
C) an organic tin or bismuth compound,
D) a thiol group-containing compound or a polyphenol which is able to react with an isocyanate group in the presence of a tertiary amine as activator and with adjacent hydroxyl groups, or mixtures, and
E) a hydrolysable halogen compound,
wherein the molar ratio SH and/or OH:metal is 2 to 500 and the molar ratio halogen/metal is 0.05 to 10.

2. Reactive compositions according to claim 1 with a concentration of inert organic solvent of less than 20 wt.% and consisting of
A) an NCO prepolymer with an NCO concentration of 1 to 8 wt.% based on the aliphatic polyisocyanate and with a concentration of monomeric polyisocyanate of less than 2 wt.% and
B) a polyol component at least 50 equivalent-% of which, with respect to the groups which can react with isocyanate, consists of compounds of the formula
HO-X-Y-X-OH (I)
in which
Y represents methylene, ethylene, -C≡C-, cyclohexylene-1,4, -1,3 or -1,2, or phenylene-1,4, -1,3 or -1,2 and
x represents methylene, OCH₂CH₂ (wherein the oxygen is bonded to Y) or cyclohexylene-1,4, -1,3 or -1,2,
wherein the ratio by equivalents of the free NCO groups in A to the NCO-reactive groups in B is 0.90 to 1.50.

3. Reactive compositions according to claim 2 in which at least 50 equivalent-% of the polyol component consists, with respect to the groups which can react with isocyanate, of 1,4-bis-(2-hydroxyethoxy)-benzene.

4. Reactive compositions according to claim 2, with a concentration of monomeric polyisocyanate of less than 0.5 wt.%, with respect to A.

5. Reactive compositions according to claim 2 with a concentration of inert organic solvent of up to 15 wt.%, with respect to A.

6. Reactive compositions according to claim 2 with an NCO prepolymer with a number average molecular weight of 700 to 8 000.

7. Reactive compositions according to claim 2, in which the NCO prepolymer A is one based mainly on 4,4'-diisocyanato-dicyclohexylmethane.

8. Reactive compositions according to claim 2, in which propylene oxide polyethers with on average 2 to 3 hydroxyl groups and which contain up to a maximum of 50 wt.% of incorporated polyethylene oxide units, with average molecular weights between 200 and 9000, and/or difunctional tetrahydrofuran-polyethers with average molecular weights between 200 and 4000, are used in isocyanate prepolymer A.

9. Reactive compositions according to claim 2, wherein the ratio by equivalents of free NCO groups in A to NCO-reactive groups in B is 1 to 1.30.

10. Use of reactive compositions according to claim 1 as binders.

11. Use of compositions according to claims 1-9 to coat any substrate at all.

12. Use of compositions according to claims 1-9 to coat leather or textiles.

## Revendications

1. Matières réactives constituées par des composés A) contenant des groupes isocyanate et par des polyols B) **caractérisées en ce qu'**elles contiennent une combinaison de catalyseurs constituée par
C) un composé organique d'étain ou de bismuth,
D) un composé portant des groupes thiol ou un polyphénol apte à réagir avec un groupe isocyanate en présence d'une amine tertiaire à titre d'activateur et comprenant des groupes hydroxyle voisins, ou encore leurs mélanges,
E) un composé halogéné hydrolysable,
le rapport molaire SH et/ou OH:métal s'élevant de 2 à 500 et le rapport molaire halogène/métal s'élevant de 0,05 à 10.

2. Matières réactives selon la revendication 1, dont la teneur en solvant organique inerte est inférieure à 20 % en poids et qui sont constituées par
A) un prépolymère contenant des groupes NCO dont la teneur en groupes NCO s'élève de 1 à 8 % en poids, à base de polyisocyanate aliphatique et possédant une teneur en polyisocyanate monomère inférieure à 2 % en poids et
B) un composant de polyol qui est constitué, à concurrence d'au moins 50 équivalents %, rapportés aux groupes réactifs vis-à-vis d'isocyanates, par des composés répondant à la formule
HO-X-Y-X-OH (I)
dans laquelle
Y représente un groupe méthylène, un groupe éthylène, une liaison -C≡C-, un groupe cyclohexylène-1,4, -1,3, -1,2, un groupe phénylène-1,4, -1,3 -1,2 et
X représente un groupe méthylène, un groupe OCH₂CH₂ (dans lequel l'atome d'oxygène est lié à Y), un groupe cyclohexylène-1,4, -1,3, -1,2,
le rapport d'équivalence des groupes NCO libres de A aux groupes de B aptes à réagir Vis-à-vis de groupes NCO s'élevant de 0,90 à 1,50.

3. Matières réactives selon la revendication 2, dans lesquelles le composant de polyol est constitué, à concurrence d'au moins 50 équivalents %, rapportés aux groupes réactifs vis-à-vis d'isocyanates, du 1,4-bis(2-hydroxyéthoxy)-benzène.

4. Matières réactives selon la revendication 2, dont la teneur en polyisocyanate monomère est inférieure à 0,5 % en poids, rapporté à A.

5. Matières réactives selon la revendication 2, dont la teneur en solvant organique inerte s'élève jusqu'à 15 % en poids, rapportés à A.

6. Matières réactives selon la revendication 2, comprenant un prépolymère qui contient des groupes NCO et qui possède un poids moléculaire déterminé comme moyenne en nombre de 700 à 8000.

7. Matières réactives selon la revendication 2, selon lesquelles le prépolymère A contenant des groupes NCO est un prépolymère à base principalement du 4,4'-diisocyanato-dicyclohexylméthane.

8. Matières réactives selon la revendication 2, dans lesquelles on met en oeuvre, dans le prépolymère A contenant des groupes isocyanates, des polyéthers d'oxyde de propylène présentant en moyenne de 2 à 3 groupes hydroxyle, qui contiennent des unités d'oxyde de polyéthylène incorporées jusqu'à concurrence maximale de 50 % en poids et qui possèdent des poids moléculaires moyens entre 200 et 9000 et/ou des polyéthers de tétrahydrofuranne difonctionnels possédant des poids moléculaires moyens entre 200 et 4000.

9. Matières réactives selon la revendication 2, dans lesquelles le rapport d'équivalence des groupes NCO libres de A aux groupes de B aptes à réagir vis-à-vis de groupes NCO s'élève de 1 à 1,30.

10. Utilisation des matières réactives selon la revendication 1, comme liant.

11. Utilisation des matières selon les revendications 1 à 9, pour l'enduction de n'importe quel substrat.

12. Utilisation des matières selon les revendications 1 à 9, pour l'enduction de cuirs ou de textiles.
